# EUROPEAN PATENT APPLICATION

(11) **EP 3 636 061 A1**
(43) Date of publication of application: **15.04.2020**
(21) Application number: 19202174.9
(22) Date of filing: 09.10.2019
(51) Int. Cl.: A01B 69/00, A01B 79/00, G05D 1/02

(54) **SYSTEM AND METHOD FOR MONITORING AN ORIENTATION OF AN AGRICULTURAL IMPLEMENT DURING AN AGRICULTURAL OPERATION**

(30) Priority: 10.10.2018 US 201816156107
(71) Applicant: CNH Industrial Belgium N.V., 8210 Zedelgem (BE)
(72) Inventor: Stanhope, Trevor, Palos Hills, Illinois 60465 (US)
(74) Representative: CNH Industrial IP Department

(57) **Abstract**

A system (100) for monitoring an orientation of an agricultural implement (10) during an agricultural operation is disclosed. The system (100) includes a work vehicle (12) and an agricultural implement (10) coupled to the work vehicle (12) and configured to be towed by the work vehicle (12). The system (100) includes a vision-based sensor (108) coupled to the work vehicle (12) and a controller (102) communicatively coupled to the vision-based sensor (108). The controller (102) includes a processor (104) and associated memory (106). The memory (106) stores instructions that, when executed by the processor (104), configure the controller (102) to receive image data from the vision-based sensor (108); determine an orientation parameter based on the received image data; and initiate a corrective action based on the orientation parameter of the agricultural implement (10) while the agricultural implement (10) is being towed by the work vehicle (12). The orientation parameter describes an orientation of the agricultural implement (10) relative to the work vehicle (12).

## Description

### FIELD

The present disclosure generally relates to agricultural implements and, more particularly, to systems and methods for monitoring an orientation of an agricultural implement being towed by a work vehicle during an agricultural operation.

### BACKGROUND

Agricultural implements, such as planters, cultivators, pull-type sprayers, nutrient applicators, and/or the like, are configured to be towed across a field by a suitable work vehicle, such as an agricultural tractor. While traversing the field, the implement is configured to perform one or more operations on the field, such as planting seeds, cultivating the soil, and/or applying pesticides, nutrients, and/or other agricultural substances. In many instances, to maintain the desired precision of the operation(s) being performed by the implement, it is necessary that the implement have a generally constant orientation or position relative to the work vehicle. Impact may also occur between the implement and work vehicle during tight turns, for example when turning the implement around at the end of a pass across the field.

Accordingly, an improved system and method for controlling the direction of travel of an agricultural implement would be welcomed in the technology.

### BRIEF DESCRIPTION

Aspects and advantages of the technology will be set forth in part in the following description, or may be obvious from the description, or may be learned through practice of the technology.

In one aspect, the present subject matter is directed to a system for monitoring an orientation of an agricultural implement being towed by a work vehicle during an agricultural operation. The system may include a work vehicle and an agricultural implement coupled to the work vehicle and configured to be towed by the work vehicle. The system may include a vision-based sensor coupled to the work vehicle and a controller communicatively coupled to the vision-based sensor. The controller may include a processor and associated memory. The memory may store instructions that, when executed by the processor, configure the controller to receive image data from the vision-based sensor; determine an orientation parameter based on the received image data; and initiate a corrective action based on the orientation parameter of the agricultural implement while the agricultural implement is being towed by the work vehicle. The orientation parameter may describe an orientation of the agricultural implement relative to the work vehicle.

In another aspect, the present subject matter is directed to a method for monitoring an orientation of an agricultural implement being towed by a work vehicle during an agricultural operation. The method may include receiving image data from a vision-based sensor; determining an orientation parameter based on the received image data; and initiating a corrective action based on the orientation parameter of the agricultural implement while the agricultural implement is being towed by the work vehicle. The orientation parameter may describe an orientation of the agricultural implement relative to the work vehicle.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 illustrates a top view of one embodiment of an agricultural implement being towed by a work vehicle in accordance with aspects of the present subject matter;
FIG. 2 illustrates a perspective view of the agricultural implement shown in FIG. 1, particularly illustrating various components of the implement;
FIG. 3 illustrates a top view of one embodiment of a track assembly of an agricultural implement in accordance with aspects of the present subject matter;
FIG. 4 illustrates a schematic view of one embodiment of a system for controlling the direction of travel of an agricultural implement in accordance with aspects of the present subject matter; and
FIG. 5 illustrates a flow diagram of one embodiment of a method for monitoring an orientation of an agricultural implement being towed by a work vehicle during an agricultural operation in accordance with aspects of the present subject matter.

Repeat use of reference characters in the present specification and drawings is intended to represent the same or analogous features or elements of the present technology.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to systems and methods for monitoring an orientation of an agricultural implement being towed by a work vehicle during an agricultural operation. A vision-based sensor, such as a rearward-facing camera, may be mounted to the work vehicle and configured to collect image data that describes an orientation of the implement relative to the work vehicle. A controller may be configured to receive image data from the vision-based sensor and determine an orientation parameter based on the received image data. The orientation parameter may include or describe one or more orientation angles or orientation distances of the implement relative to the work vehicle.

The controller may be configured to initiate a corrective action based on the orientation of the agricultural implement (e.g., as described by the orientation parameter) while the agricultural implement is being towed by the work vehicle. During performance of the agricultural operation, the agricultural implement may become misaligned, for example as a result of a sloping or uneven ground surface. Additionally, during a turning or reversing operation in a headland, for example, the implement may become misaligned, for example as a result of contacting rough or uneven surface or another impediment.

The corrective action may be initiated to prevent damage to the implement or facilitate correct performance of the agricultural operation. Example corrective actions include slowing, stopping, or reversing the work vehicle; steering at least one of the work vehicle, implement, or a hitch coupling the work vehicle to the implement; or providing a notification to an operator of the work vehicle.

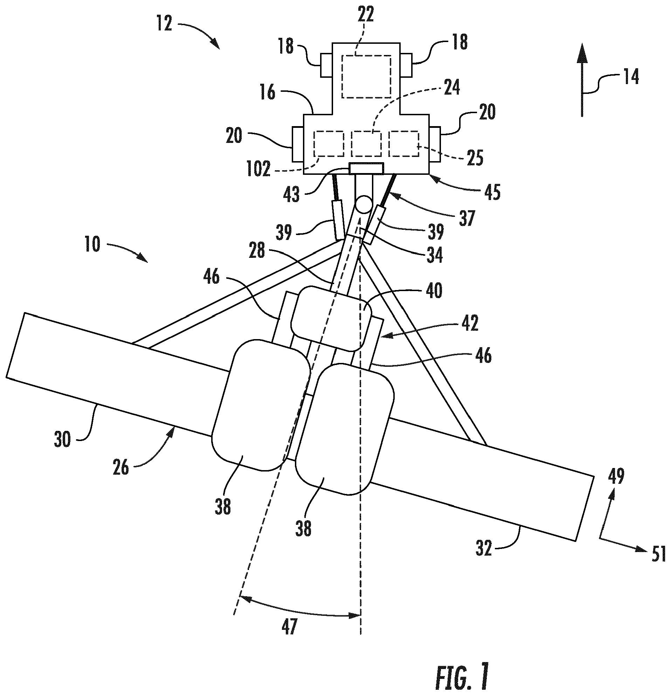

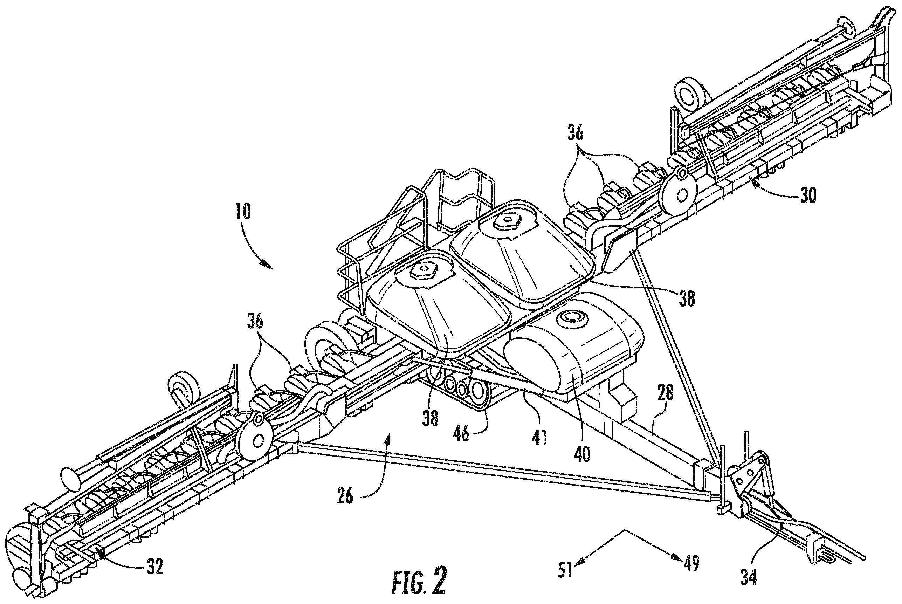

Referring now to the drawings, FIGS. 1 and 2 illustrate differing views of one embodiment of an agricultural implement 10 in accordance with aspects of the present subject matter. Specifically, FIG. 1 illustrates a top view of the agricultural implement 10 coupled to a work vehicle 12. Additionally, FIG. 2 illustrates a perspective view of the implement 10, particularly illustrating various components of the implement 10.

In general, the work vehicle 12 may be configured to tow the implement 10 across a field in a forward direction of travel of the work vehicle 12 (e.g., as indicated by arrow 14 in FIG. 1). In several embodiments, an orientation of the implement 10 relative to the work vehicle 12 may be controlled by a steerable component (e.g., a track assembly 42) of the implement 10. As shown, the work vehicle 12 may be configured as an agricultural tractor and the implement 10 may be configured as an associated planter. However, in other embodiments, the work vehicle 12 may be configured as any other suitable type of vehicle, such as an agricultural harvester, a self-propelled sprayer, and/or the like. Similarly, the implement 10 may be configured as any other suitable type of implement, such as a tillage implement.

As shown in FIG. 1, the work vehicle 12 may include a frame or chassis 16 configured to support or couple to a plurality of components. For example, a pair of steerable front wheels 18 and a pair of driven rear wheels 20 may be coupled to the frame 16. The wheels 18, 20 may be configured to support the work vehicle 12 relative to the ground and move the work vehicle 12 in the direction of travel across the field. In this regard, the work vehicle 12 may include an engine 22 and a transmission 24 mounted on the frame 16. The transmission 24 may be operably coupled to the engine 22 and may provide variably adjusted gear ratios for transferring engine power to the driven wheels 20. However, it should be appreciated that, in alternative embodiments, the front and rear wheels 18, 20 may be driven. Additionally, it should be appreciated that, in further embodiments, the work vehicle 12 may include a track assembly(ies) (not shown) in place of the front and/or rear wheels 18, 20. It should also be appreciated that, in a further embodiment, the frame 16 may be articulated in addition to or in lieu of the steerable wheels 18. The work vehicle 12 may be include at least one brake 25 operatively associated with one of more of the wheels 18, 20 to reduce a speed of the work vehicle 12 (e.g., stop the work vehicle 12).

Referring to FIGS. 1 and 2, the implement 10 may include a frame 26 configured to support and/or couple to one or more components of the implement 10. Specifically, in several embodiments, the frame 26 may include a center section 28 and a pair of wings sections 30, 32. In one embodiment, the wings sections 30, 32 may be pivotably coupled to center section 28 in a manner that permits the wing sections 30, 32 to fold forward to reduce the lateral width of the implement 10, such as during storage or transportation of the implement 10 on a road. In such embodiment, the implement 10 may include a pair of actuators 41 (only one actuator 41 is shown in FIG. 2), with each actuator 41 being coupled between one of the wings sections 30, 32 in the center section 28. Furthermore, a tow bar 34 may be coupled to the center section 28 to allow the implement 10 to be towed by the work vehicle 12. In some embodiments, a hitch assembly 37 may include one or more hitch actuators 39 that are configured to adjust the orientation of the implement 10 relative to the work vehicle 12.

In some embodiments, a track assembly 42 may be configured to steer the agricultural implement 10. The track assembly 42 may be coupled to the center section 28 to support at least a portion of the frame 26 relative to the ground. As shown in FIG. 2, the wing sections 30, 32 may generally be configured to support a plurality of seed planting units (or row units) 36. As is generally understood, each row unit 36 may be configured to deposit seeds at a desired depth beneath the soil surface and at a desired seed spacing as the implement 10 is being towed by the work vehicle 12, thereby establishing rows of planted seeds. In some embodiments, the bulk of the seeds to be planted may be stored in one or more hoppers or seed tanks 38 mounted on or otherwise supported by the frame 26. Thus, as seeds are planted by the row units 36, a pneumatic distribution system (not shown) may distribute additional seeds from the seed tanks 38 to the individual row units 36. Additionally, one or more fluid tanks 40 mounted on or otherwise supported by the frame 26 may store agricultural fluids, such as insecticides, herbicides, fungicides, fertilizers, and/or the like, which may be applied during operation of the implement 10.

It should be appreciated that, for purposes of illustration, only a portion of the row units 36 of the implement 10 have been shown in FIG. 2. In general, the implement 10 may include any number of row units 36, such as 6, 8, 12, 16, 24, 32, or 36 row units. In addition, it should be appreciated that the lateral spacing between row units 36 may be selected based on the type of crop being planted. For example, the row units 36 may be spaced approximately 30 inches from one another for planting corn, and approximately 15 inches from one another for planting soybeans.

In accordance with aspects of the present disclosure, the work vehicle 12 may include one or more vision-based sensors 43. The vision-based sensor(s) 43 may correspond to any suitable sensing device(s) configured to detect or capture image data or other vision-based data (e.g., point cloud data) associated with an orientation of the implement 10 relative to the work vehicle 12. For example, the vision-based sensor(s) 43 may include variety of suitable vision-based sensor types, including an image capture device such as a camera (e.g., an RGB, NIR-RGB, or CIR, or other infrared type camera), a LIDAR sensor, a RADAR sensor, stereographic camera(s) having two or more lenses with a separate image sensor for each lens to allow the camera(s) to capture stereographic or three-dimensional images, and/or the like. The vision-based sensor(s) 43 may be physically located proximate a rearward end 45 of the work vehicle 12 and/or oriented towards a rearward direction that is opposite the forward direction of travel 14 of the work vehicle 12.

The implement 10 may have an orientation relative to the work vehicle 12. The orientation may be defined according to at least one a yaw angle, roll angle, or pitch angle. For example, referring to FIG. 1, the center section 28 may extend in a fore-aft direction 49 of the implement 10. A yaw angle 47 may be defined between the forward direction of travel 14 of the work vehicle 12 and the fore-aft direction 49 of the implement 10. Similarly, a roll angle may be defined as an angle of rotation of the implement 10 relative to the work vehicle 12 about the fore-aft direction 49. A cross direction 51 may be defined that is generally perpendicular to the fore-aft direction 49. A pitch angle may be defined as an angle of rotation of the implement 10 relative to the work vehicle 12 about the cross direction 51.

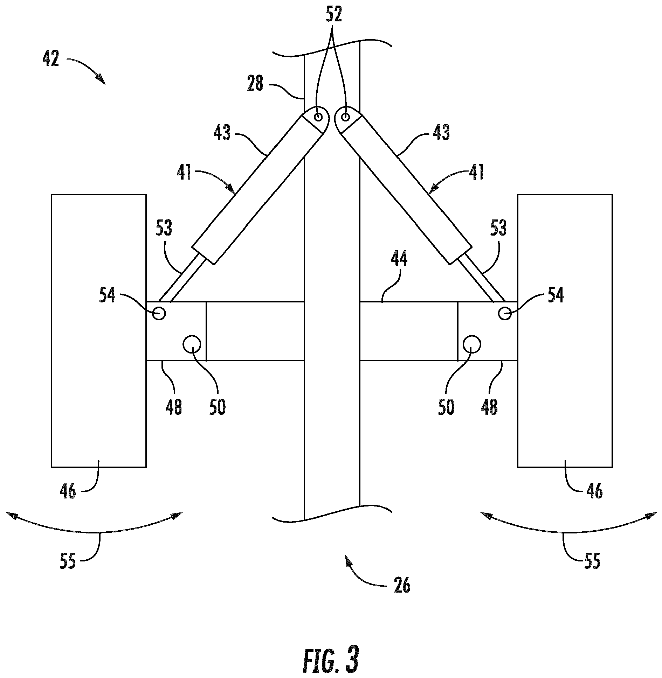

Referring now to FIG. 3, one embodiment of a track assembly 42 suitable for use with the implement 10 shown in FIGS. 1 and 2 is illustrated in accordance with aspects of the present subject matter. In several embodiments, the track assembly 42 may include an axle 44 coupled to the center section 28 of the frame 26. The track assembly 42 may also include a pair of tracks 46 that are pivotably coupled to the axle 44. For example, in one embodiment, each of the tracks 46 may be coupled to a corresponding knuckle 48, with each knuckle 48 being pivotably coupled to the axle 44 at a pivot joint 50. As such, the pivot joints 50 may permit the tracks 46 to pivot or otherwise move relative to the axle 44 in a manner that adjusts an orientation of the implement 10 relative to the work vehicle 12 (e.g., by adjusting orientation of the tracks 46). However, it should be appreciated that, in alternative embodiments, the tracks 46 of the track assembly 42 may be movably coupled to the frame 26 in any other suitable manner that permits a direction of travel of the implement 10 to be adjusted. Furthermore, it should be appreciated that the implement 10 may include other components configured to adjust the direction of travel of the implement 10. For example, the implement 10 may include one or more steerable wheels or coulters (not shown) that are configured to adjust the direction of travel of the implement 10.

Moreover, the track assembly 42 may include a pair of actuators 41 configured to move the tracks 46 relative to the implement frame 26. As shown, in several embodiments, the actuators 41 may be pivotably coupled to the center section 28 at pivot joints 52 and pivotably coupled to a respective one of the knuckles 48 at a pivot joint 54. As will be described below, the actuators 41 may be configured to extend and/or retract to move the tracks 46 relative to the center section 28 of the frame 26 (e.g., represented by arrows 55), which, in turn, adjusts the direction of travel of the implement 10. In the illustrated embodiment, the actuators 41 correspond to fluid-driven actuators, such as hydraulic or pneumatic cylinders. However, it should be appreciated that the actuators 41 may correspond to any other suitable type of actuator, such as electric linear actuators. Furthermore, it should be appreciated that the implement 10 may include any other suitable number of actuators configured to adjust the position of the tracks 46 relative to the frame 26, such as a single actuator or three or more actuators.

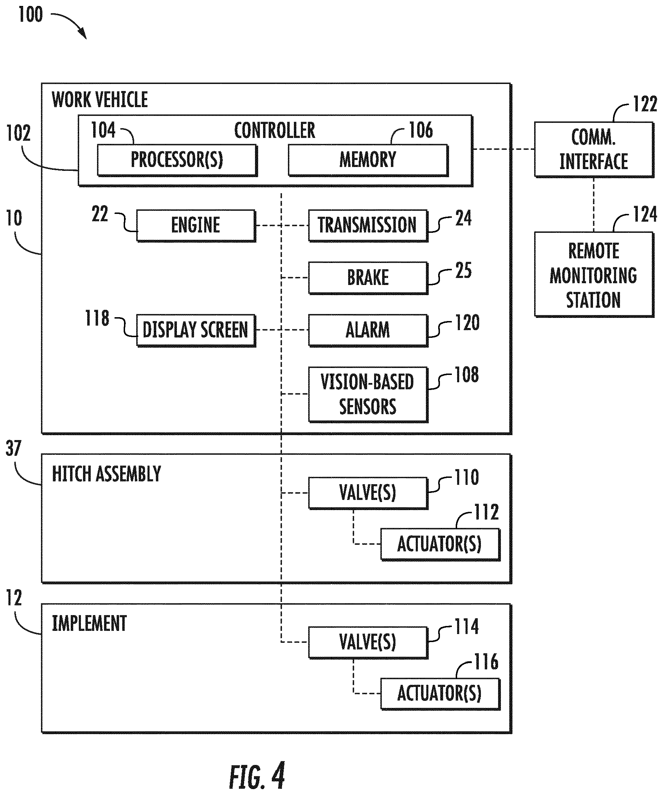

Referring now to FIG. 4, a schematic view of one embodiment of a system 100 for monitoring an orientation of an agricultural implement being towed by a work vehicle during an agricultural operation in accordance with aspects of the present subject matter. In general, the system 100 will be described herein with reference to the implement 10, the work vehicle 12, the hitch assembly 39 and/or the track assembly 42 described above with reference to FIGS. 1-3. However, it should be appreciated by those of ordinary skill in the art that the disclosed system 100 may generally be utilized with implements having any other suitable implement configuration, work vehicles having any other suitable work vehicle configuration, and/or track assemblies having any other suitable assembly configuration. For example, the agricultural implement may be configured as a tiller, seeder, fertilizer, etc.

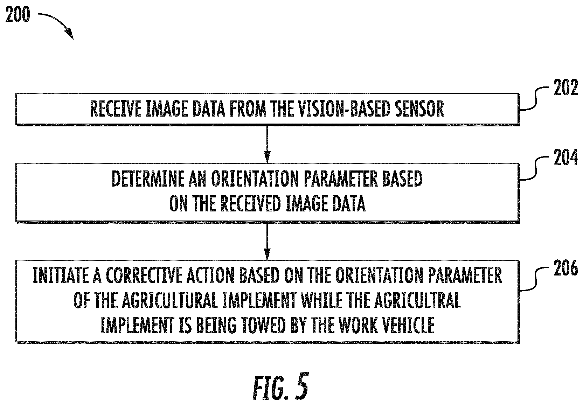

As shown in FIG. 4, the system 100 may include one or more controllers 102 positioned on and/or within or otherwise associated with the work vehicle 12. In general, the controller(s) 102 may comprise any suitable processor-based device known in the art, such as a computing device or any suitable combination of computing devices. Thus, in several embodiments, the controller(s) 102 may include one or more processor(s) 104 and associated memory device(s) 106 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 106 of the controller(s) 102 may generally comprise memory element(s) including, but not limited to, a computer readable medium (e.g., random access memory (RAM)), a computer readable non-volatile medium (e.g., a flash memory), a floppy disc, a compact disc-read only memory (CD-ROM), a magneto-optical disc (MOD), a digital versatile disc (DVD), and/or other suitable memory elements. Such memory device(s) 106 may generally be configured to store suitable computer-readable instructions that, when implemented by the processor(s) 104, configure the controller(s) 102 to perform various computer-implemented functions, such as one or more aspects of the method 200 described below with reference to FIG. 5. In addition, the controller(s) 102 may also include various other suitable components, such as a communications circuit or module, one or more input/output channels, a data/control bus and/or the like.

It should be appreciated that the controller(s) 102 may correspond to an existing controller(s) of the work vehicle 12 and/or the implement 10, or the controller(s) 102 may correspond to a separate processing device. For instance, in one embodiment, the controller(s) 102 may form all or part of a separate plug-in module that may be installed in association with the work vehicle 12 to allow for the disclosed systems and methods to be implemented without requiring additional software to be uploaded onto existing control devices of the work vehicle 12. It should also be appreciated that the functions of the controller(s) 102 may be performed by a single processor-based device or may be distributed across any number of processor-based devices, in which instance such devices may be considered to form part of the controller(s) 102. For instance, the functions of the vehicle controller(s) 102 may be distributed across multiple application-specific controllers, such as an electro-hydraulic remote (EHR) valve controller, a navigation controller, and/or the like.

In several embodiments, the controller(s) 102 may be configured to monitor one or more orientation parameter(s) associated with the orientation of the implement 10 based on sensor data received from one or more vision-based sensor(s) 108. Specifically, the controller(s) 102 may be communicatively coupled to the vision-based sensor(s) 108 via a wired or wireless connection to allow image data to be transmitted from the sensor(s) 108 to the controller(s) 102.

In some embodiments, the controller 102 may be configured to determine an orientation parameter based on the received image data. The orientation parameter may describe an orientation of the agricultural implement 10 relative to the work vehicle 12. For example, the orientation parameter may include at least one of the yaw angle 47, roll angle about the fore-aft direction 49, or pitch angle about the cross direction 51. In some embodiments, the orientation parameter may include information about the distance between one more components of the implement 10 and one or more components of the work vehicle 12.

The controller 102 may be configured to determine the orientation parameter(s) by extrapolating distances, angles, etc. based on the received image data. For example, the controller 102 may be configured to locate one or more features or components of the implement 10 within the received image data and calculate the orientation parameter(s) based on such locations within the received image data, for example, based on known parameters associated with the image data or vision-based sensors 108. Examples of such known parameters include characteristics and features of the image data, such as aspect ratio, information about the physical location and orientation of the vision-based sensor(s) 43 relative to the implement 10 and/or work vehicle 12 (e.g., angle of view, vertical position, lateral position, etc.), and/or various characteristics associated with the vision-based sensor(s) 43 (e.g., aperture, focal length, field of view, baseline distance, etc.). In some embodiments, the implement 10 may include one or more physical markers (e.g., patterned stickers, paint, etc.) configured to help the controller 102 process the image data. Example markers include slow moving vehicle (SMV) markers, braking reflectors, speed indicator symbol (SIS) markers (e.g., for braking requirements), or other marks designed specifically for tracking purposes (e.g., a high contrast design or pattern), and/or infrared-reflecting markers. For example, one or markers may be located at various locations on the frame 26 of the implement 10. The locations, aspect ratios, geometric distortion, and/or sizes of the various markers may be used to determine the orientation parameter.

The controller 102 may be configured to initiate a corrective action based on the orientation parameter of the agricultural implement 10 while the agricultural implement 10 is being towed by the work vehicle 12. In some embodiments, the corrective action may include reducing a speed of the work vehicle 12 (e.g., completely stop the work vehicle 12). For example, the controller 102 may be configured to control at least one of the engine 22, transmission 24, or brake 25 of the work vehicle 12 to reduce the speed of the work vehicle 12.

In some embodiments, the corrective action may include adjusting an orientation of the implement 10 relative to the work vehicle 12. As examples, the controller 102 may be configured to control a steering operation of the work vehicle 12, a steering operation of the implement 10, and/or adjust a hitch assembly 37 to adjust the orientation of the implement 10 relative to the work vehicle 12.

As an example, the controller 102 may be communicatively coupled to one or more control valve(s) 110 configured to regulate the supply of fluid (e.g., hydraulic fluid or air) to one or more corresponding actuator(s) 112 associated with the hitch assembly 37. The actuator(s) 112 may be configured to adjust an orientation (e.g., the roll angle, the pitch angle, or the yaw angle 47) of the implement 10 relative to the work vehicle 12. For instance, the actuator(s) 112 of the hitch assembly 37 may correspond with the actuators 41 of the hitch assembly 37 described above with reference to FIG. 1.

As another example, the controller 102 may be communicatively coupled to one or more control valve(s) 114 configured to regulate the supply of fluid (e.g., hydraulic fluid or air) to one or more corresponding actuator(s) 116 associated with the implement 10 that are configured to adjust an orientation (e.g., the roll angle, the pitch angle, or the yaw angle 47) of the implement 10 relative to the work vehicle 12. For instance, the actuators(s) 116 may correspond to the actuators 41 of the track assembly 42 described above with reference to FIG. 3.

As yet a further example, the controller 102 may be configured to control a steering operation of the work vehicle 12. The controller 102 may be configured to steer one or more of the steerable front wheels 18 of the work vehicle 12.

In some embodiments, the system 100 may be configured to prevent damage to the implement 10 and or work vehicle 12 caused by impact between the implement 10 and an impediment, for example when the work vehicle 12 is reversing, turning through a headland area after a pass through the field in which the agricultural operation is performed, or otherwise performing the agricultural operation. The controller 102 may be configured to determine implement proximity information based on the image data. The implement proximity information may describe a distance between the frame 26 of the agricultural implement 10 and an impediment to a movement of the implement 10. Examples of the impediment 10 may include a portion (e.g., an uneven portion or protrusion) of a ground surface over which the implement 10 is drawn. Additional examples include other pieces of machinery or equipment, trees or other vegetation, rocks, and any other impediment that may be found in a field and/or headland adjacent a field. The controller 102 may be configured to initiate the corrective action based on the distance between the frame 26 of the agricultural implement 10 and the impediment to a movement of the implement 10. For example, the controller 102 may be configured to reduce the speed of the work vehicle 12 (e.g., stop the work vehicle 12) to prevent impact or contact between the frame 26 and impediment. As another example, the controller 102 may be configured to adjust the orientation of the implement 10 relative to the work vehicle 12 to prevent impact or contact between the frame 26 and the impediment.

In some embodiments, the system 100 may be configured to prevent damage to the implement 10 and or work vehicle 12 caused by impact between the implement 10 and work vehicle 12, for example, during a turn operation. The work vehicle 12 may perform a tight turn at the end of a pass through the field, for example, in a headland area. In such instances, if the work vehicle 12 turns too tightly, the implement 10 may contact and damage the work vehicle 12. The controller 102 may be configured to compare the orientation parameter with a predetermined threshold value that is associated with the frame 26 of the agricultural implement 10 impacting the work vehicle 12. The controller 102 may be configured to initiate a corrective action associated with preventing the frame 26 of the agricultural implement 10 from contacting the work vehicle 12 based on the comparison of the orientation parameter with the predetermined threshold. As an example, the predetermined threshold may comprise a yaw angle value at which the implement 10 would contact the work vehicle 12 based on the size and geometry of the implement 10 and work vehicle 12. Examples of the corrective action include reducing the speed of the work vehicle 12 (e.g., stopping the work vehicle 12) and adjusting the orientation of the implement 10 (e.g., by controlling a steering operation associated with at least one of the implement 10 or work vehicle 12, or adjust the hitch assembly 37 coupling the implement 10 to the work vehicle 12).

In some embodiments, the system 100 may include a display screen 118 and/or an alarm 120 configured to provide a notification to an operator and/or a supervisor of the work vehicle 12. For example, the display screen 118 may be located in a cab of the work vehicle 12. The alarm 120 may be or include a light and/or speaker configured to illuminate or produce an audible alarm to alert the operator.

In some embodiments, the work vehicle 12 and/or agricultural implement 10 may be configured for autonomous or semi-autonomous operation. The system 100 (e.g., the work vehicle 12) may include a communication interface 122 configured to wirelessly communicate with a remote monitoring station 124. The communication interfaces 122 may be configured to wirelessly transmit and/or receive data via any suitable network, such as a local wireless network using any suitable wireless communications protocol (e.g., Wi-Fi, Bluetooth, and/or the like) and/or a broader network, such as a wide-area network (WAN), using any suitable communications protocol (e.g., TCP/IP, HTTP, SMTP, FTP).

Referring now to FIG. 5, a flow diagram of one embodiment of a method 200 for monitoring an orientation of an agricultural implement being towed by a work vehicle during an agricultural operation in accordance with aspects of the present subject matter. In general, the method 200 will be described herein with reference to the implement 10, the work vehicle 12, the track assembly 42 and the system 100 described above with reference to FIGS. 1-4. However, it should be appreciated by those of ordinary skill in the art that the disclosed method 200 may generally be utilized to control the operation of an agricultural implement being towed by a work vehicle for any agricultural operation. The agricultural implement may have any suitable implement configuration; the work vehicle may have any other suitable vehicle configuration; and the hitch assembly may have any other suitable assembly configuration. The systems having any other suitable system configuration. In addition, although FIG. 5 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 5, at (202), the method 200 may include receiving image data from a vision-based sensor. For example, the controller 102 may receive the image data from the vision-based sensor 43, which may include one or more cameras.

The method 200 may include, at (204) determining an orientation parameter based on the received image data. The orientation parameter describes an orientation of the agricultural implement relative to the work vehicle. For example, the orientation parameter may include at least one of a yaw angle 47, roll angle, or pitch, for example as descried with reference to FIG. 1.

The method 200 may include, at (206) initiating a corrective action based on the orientation parameter of the agricultural implement 10 while the agricultural implement 10 is being towed by the work vehicle 12. As examples, the controller 102 may be configured to reduce a speed of the work vehicle 12 and/or adjust the orientation of the agricultural implement 10 (e.g., by controlling a steering operation of at least one of the work vehicle 12 or the implement 10, or by adjusting the hitch assembly 37, for example as described above with reference to FIGS. 1 through 3). As an example, the corrective action may include providing steering feedback to an operator of the work vehicle 12, such as vibrating a steering wheel of the work vehicle 12 and/or actively turning the steering wheel of the work vehicle 12 to steer the work vehicle 12 and alert the operator.

Initiating the corrective action may include controlling a flow of fluid associated with an actuator 112, 116 that is configured to adjust at least one of a roll angle, a pitch angle, or a yaw angle 47 of the agricultural implement 10, for example as described above with reference to FIG. 4. For example, the controller 102 may be configured to adjust at least one of the hitch actuators 39 or actuators 41 of the track assembly 42.

In some embodiments, the corrective action may be initiated in response to detecting that the orientation parameter has exceeded a predetermined operating range. The predetermined operating range may be associated with normal or baseline operation of the agricultural implement 10. For example, the orientation parameter may include the yaw angle 47, for example as described above with reference to FIG. 1. The predetermined operating range may include a yaw angle range associated with normal operation (e.g., on a flat ground surface).

In such situations, the fore-aft direction 49 of the implement 10 is substantially aligned with the direction of travel 14 of the work vehicle 12. As discussed above, the ground surface may be sloped (e.g., a side sloped towards a direction perpendicular to a direction of travel 14 of the work vehicle 12). Such a sloping ground surface may cause a rearward end of the implement 10 to slide down the slope of the ground surface. This misalignment may be reflected in an increase in the yaw angle 47. In some embodiments, the yaw angle range may range from about -15 degrees to 15 degrees, in some embodiments from about -10 degrees to 10 degrees, in some embodiments from about -7 degrees to 7 degrees, in some embodiments from about -5 degrees to 5 degrees, in some embodiments from about -3 degrees to 3 degrees, and in some embodiments from about -1 degrees to 1 degrees.

In some embodiments, the corrective action may be initiated based on a comparison between the orientation parameter and a predetermined threshold value that is associated with the frame 26 of the agricultural implement 10 contacting the work vehicle 12. The corrective action may be configured to prevent a potential impact between the frame 26 of the agricultural implement 10 and the impediment, for example, as described above with reference to FIG. 4.

In some embodiments, the controller 102 may employ a control loop (proportional, proportional-integral, and/or proportional-integral-derivative) to control the orientation parameter based on at least one of a target value, the predetermined threshold, and/or the predetermined range described herein.

In some embodiments, the controller 102 may be configured to monitor a desired swath path associated with performance of the agricultural operation. The desired swath path may have a location that is defined relative to bounds (e.g., edges) of the field within which the agricultural operation is performed and/or the edges of a previous pass within the field. The controller 102 may be configured to locate an edge of the previous pass within the field relative to the implement 10, for example based on the image data and/or location data (e.g., from a GPS receiver or the like). The controller 102 may be configured to initiate the corrective action based on a comparison between the orientation parameter and the location of the edge of the previous pass. For example, the corrective action may be initiated to adjust the orientation of the implement 10 for the purpose of prevent a gap from forming between the agricultural implement and the edge of the previous pass. Such a gap would undesirably result in a portion of the field that was not subjected to the agricultural operation (e.g., till, plant, etc.).

In some embodiments, the corrective action may be configured to prevent a potential impact between the frame 26 of the agricultural implement 10 and the impediment, for example during a tight turn. The corrective action may be initiated based on a distance between the frame 26 of the agricultural implement 10 and the work vehicle 12. For example, the controller 102 may be configured to determine implement proximity information based on the image data received from the vision-based sensors 108, for example as described above with reference to FIG. 4. The implement proximity information may describe the distance between the frame 26 of the agricultural implement 10 and the work vehicle 12.

In some embodiments, the corrective action may include providing a notification or alarm to an operator and/or a supervisor of the work vehicle 12 via the display screen 118 or alarm 120. The notification or alarm may indicate an imminent impact between the agricultural implement 10 and at least one of an impediment or the work vehicle 12, for example as described above. The notification or alarm may indicate that the orientation parameter has exceeded a predetermined operating range associated with normal or baseline operation. The notification or alarm may indicate that the orientation parameter has exceeded a predetermined threshold value that is associated with the frame 26 of the agricultural implement 10 contacting the work vehicle 12, for example as described above. In some embodiments, the controller 102 may be configured to wirelessly communicate a notification or alarm via the communication interface 122 to the remote monitoring station 124 or other remote location.

It is to be understood that the steps of the method 200 may be performed by the controller 102 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the controller 102 described herein, such as the method 200, is implemented in software code or instructions which are tangibly stored on a tangible computer readable medium. The controller 102 loads the software code or instructions via a direct interface with the computer readable medium or via a wired and/or wireless network. Upon loading and executing such software code or instructions by the controller 102, the controller 102 may perform any of the functionality of the controller 102 described herein, including any steps of the method 200 described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

This written description uses examples to disclose the technology, including the best mode, and also to enable any person skilled in the art to practice the technology, including making and using any devices or systems and performing any incorporated methods. The patentable scope of the technology is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A system (100) for monitoring an orientation of an agricultural implement (10) being towed by a work vehicle (12) during an agricultural operation, the system (100) includes a work vehicle (12), an agricultural implement (10) coupled to the work vehicle (12) and configured to be towed by the work vehicle (12), and a vision-based sensor (108) coupled to the work vehicle (12), the system (100) further including a controller (102) communicatively coupled to the vision-based sensor (108), the controller (102) including a processor (104) and associated memory (106), the memory (106) storing instructions that, when executed by the processor (104), configure the controller to execute operations, the system (100) being **characterized by** the controller (102) being configured to:
receive image data from the vision-based sensor (108);
determine an orientation parameter based on the received image data, the orientation parameter describing an orientation of the agricultural implement (10) relative to the work vehicle (12); and
initiate a corrective action based on the orientation parameter of the agricultural implement (10) while the agricultural implement (10) is being towed by the work vehicle (12).

2. The system (100) as in claim 1, wherein the orientation parameter comprises at least one of a roll angle, a pitch angle, or a yaw angle of the implement (10) relative to the work vehicle (12).

3. The system (100) as in any preceding claim, wherein the controller (102) is configured to reduce a speed of the work vehicle (12) while the agricultural implement (10) is being towed by the work vehicle (10) to initiate the correct action.

4. The system (100) as in any preceding claim, wherein the controller (102) is configured to adjust the orientation of the agricultural implement (10) while the agricultural implement (10) is being towed by the work vehicle (12) to initiate the correct action.

5. The system (100) as in claim 4, wherein the controller (102) is configured to control a steering operation of the agricultural implement (10) while the agricultural implement (10) is being towed by the work vehicle (12) to adjust the orientation of the agricultural implement (10).

6. The system (100) as in claim 4, further comprising a hitch (37) coupling the agricultural implement (10) to the work vehicle (12), and wherein the controller (102) is configured to adjust the hitch (37) while the agricultural implement (10) is being towed by the work vehicle (12) to adjust the orientation of the agricultural implement (10).

7. The system (100) as in claim 4, further comprising a valve (110) and an actuator (112), the actuator (110) configured to adjust at least one of a roll angle, a pitch angle, or a yaw angle of the agricultural implement (10) relative to the work vehicle (12), the valve (110) configured to control a flow of fluid associated with the actuator (112), and wherein the controller (102) is configured to control the valve (110) to adjust the orientation of the agricultural implement (10).

8. The system (100) as in claim 4, wherein the controller (102) is configured to control steering of the work vehicle (12) to adjust the orientation of the agricultural implement (12) while the agricultural implement (10) is being towed by the work vehicle (12).

9. The system (100) as in any preceding claim, wherein the agricultural implement (10) comprises a frame (26), and wherein the controller (102) is further configured to:
determine implement proximity information based on the image data, the implement proximity information describing a distance between the frame (26) of the agricultural implement (10) and an impediment to a movement of the implement (10); and
initiate the corrective action based on the distance between the frame of the agricultural implement (10) and the impediment to a movement of the implement (10).

10. The system (100) as in any preceding claim, wherein the agricultural implement (10) comprises a frame (26), and wherein the controller (102) is further configured to:
compare the orientation parameter with a predetermined threshold value, the predetermined threshold value being associated with the frame (26) of the agricultural implement (10) impacting the work vehicle (12); and
initiate the corrective action based on the comparison of the orientation parameter with the predetermined threshold, the corrective action associated with preventing the frame (26) of the agricultural implement (12) from contacting the work vehicle (12).

11. A method (200) for monitoring an orientation of an agricultural implement (10) being towed by a work vehicle (12) during an agricultural operation, the method (200) being **characterized by**:
receiving image data from a vision-based sensor (108);
determining an orientation parameter based on the received image data, the orientation parameter describing an orientation of the agricultural implement (10) relative to the work vehicle (12); and
initiating a corrective action based on the orientation parameter of the agricultural implement (10) while the agricultural implement (10) is being towed by the work vehicle (12).

12. The method (200) as in claim 11, wherein the orientation parameter comprises at least one of a roll angle, a pitch angle, or a yaw angle of the implement (10) relative to the work vehicle (12).

13. The method (200) as in any one of claim 11 or 12, wherein initiating the corrective action comprises adjusting the orientation of the agricultural implement (10) while the agricultural implement (10) is being towed by the work vehicle (12) by at least one of:
adjusting a hitch (37) coupling the work vehicle (12) to the agricultural implement (10); or
controlling a steering operation of the work vehicle (12).

14. The method (200) as in any one of claim 11 or 12, wherein initiating the corrective action comprises adjusting the orientation of the agricultural implement (10) while the agricultural implement (10) is being towed by the work vehicle (12) by controlling a flow of fluid associated with an actuator (112) that is configured to adjust at least one of a roll angle, a pitch angle, or a yaw angle of the agricultural implement (10).

15. The method (200) as in any one of claims 11 through 14, further comprising determining implement proximity information based on the image data, the implement proximity information describing a distance between the frame (26) of the agricultural implement (10) and an impediment to a movement of the implement (10), and wherein the corrective action is initiated based on the distance between the frame (26) of the agricultural implement (10) and the impediment to a movement of the implement (10), and wherein the corrective action is configured to prevent a potential impact between the frame (26) of the agricultural implement (10) and the impediment.
